Europäisches Patentamt

European Patent Office

Office européen des brevets

Publication number: **0 160 614**
**A2**

## EUROPEAN PATENT APPLICATION

(21) Application number: 85630066.0

(22) Date of filing: 30.04.85

(51) Int. Cl.⁴: **B 60 C 21/08**

(30) Priority: 03.05.84 US 606744

(43) Date of publication of application:
06.11.85 Bulletin 85/45

(84) Designated Contracting States:
DE FR GB IT

(71) Applicant: **THE GOODYEAR TIRE & RUBBER COMPANY**
**1144 East Market Street**
**Akron, Ohio 44316(US)**

(72) Inventor: **Dobson, Robert Loren**
**397 Spring Grove Drive**
**Tallmadge Ohio 44278(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) Pneumatic tire with puncture sealing feature.

(57) Pneumatic tire having an adherent sealant composite on its inner surface comprised of an admixture of (A) partially pre-crosslinked butyl rubber, (B) polybutene, (C) thermoplastic copolymer tackifying resin and (D) reinforcing carbon black.

EP 0 160 614 A2

Croydon Printing Company Ltd.

## PNEUMATIC TIRE WITH PUNCTURE SEALING FEATURE

### Technical Field

This invention relates to a puncture sealing pneumatic tire. This invention particularly relates to a pneumatic tire of the tubeless type having a puncture sealant feature.

### Background Art

Modifications to pneumatic tires have historically been sought for retarding or preventing their deflation upon being punctured. Many methods, sealants and tire constructions have been suggested for such purpose. Fluid and semi-solid puncture sealant coatings which seal by flowing into the puncture hole have often been unsuccessful primarily because their flow characteristics have tended to cause the tire to become out of balance and also because many times the sealants have not been operable or effective over a wide temperature range extending from summer to winter conditions.

Various tire sealant compositions have been observed to either (A) provide a sealing effect but flow excessively at elevated tire temperatures or (B) possess sufficient rigidity or resistance to flow at elevated temperatures but do not adequately seal at low temperatures.

Efforts to limit or inhibit sealant flow by stiffening the composition have sometimes been undertaken by adding small quantities of crosslinkers to the sealant composition so that they only partially cure the sealant's rubber component. This has been observed to cause excessive variations from tire to tire primarily due to the varying sealant cure temperatures after application to the tire which

- 2 - 0160614

affects the state of crosslinking and thus the degree of sealant stiffening. By using a pre-partially crosslinked rubber polymer, where the active cure of crosslink agents is pre-stabilized in the rubber before application to the tire, a more thermally stable sealant composition is provided.

It is an aspect of this invention to provide a puncture sealing pneumatic tire which has ability to seal against puncturing objects or to provide a slow, relatively controlled, leak rate upon being punctured.

## Disclosure and Practice of Invention

In accordance with this invention a pneumatic tire is provided which comprises a tire casing having a strip of sealant composite adhered to its inner surface comprised of an admixture of (A) one hundred parts by weight of a pre-partially crosslinked butyl rubber, said butyl rubber having been partially crosslinked prior to mixing with the remainder of any of the following ingredients (B), (C), and (D); (B) about 40 to about 200, preferably about 100 to about 150, parts by weight polybutene having a viscosity in the range of about 50 to about 5000, preferably about 100 to about 4400, centistokes at 99°C., (C) about 40 to about 120, preferably about 80 to about 100, parts by weight of at least one thermoplastic olefin/diolefin copolymer tackifying resin having a softening point in the range of about 10°C. to about 110°C., preferably about 90°C. to about 100°C., and (D) about 50 to about 120, preferably about 70 to about 100, parts by weight reinforcing carbon black.

The viscosity of the polybutenes can conveniently be determined by ASTM method D446 and the softening point of the copolymer tackifying resin can conveniently be determined by ASTM No. E28-58T.

In U.S. Patent 4,359,078, a sealant composite is provided as a mixture of (A) a partially crosslinked butyl rubber, (B) plasticizer for the rubber which can be a polyisobutylene, (C) a tackifying resin, preferably in an amount of 2 to 50 phr and (D) a particulate rubber reinforcement which can be a carbon black. It is understood that the purpose of the polyisobutylene component is to reduce the viscosity of the composite, however, it is also understood that it carries with it a penalty of reducing or diluting both the adhesive ability and thermal stability of the sealant composite.

In contradistinction, the sealant composition of this invention provides an important and innovative departure from such mixture, particularly by (A) replacing the polyisobutylene polymer with a polybutene for the purpose of reducing the composite's viscosity with little or no loss in the sealant's thermal stability and with an observed substantial increase in the sealant's adhesion to puncturing objects and overall sealing ability and (B) the utilization of a high level of the specified tackifying resin.

In further accordance with this invention, a puncture sealing pneumatic tire of the tubeless type is provided having two spaced, essentially inextensible beads, a crown portion generally having an outer tread, a pair of individual sidewalls extending radially from the axial outer edges of said crown portion to join the respective beads, a supporting or reinforcing structure for said crown portion and sidewalls, usually extending from bead to bead and often referred to as a carcass, and said sealant composite strip adhered to its inner surface. It is preferred that the sealant composite sheet or strip is positioned and adhered circumferentially around the inside of the tire on its inner surface in the area of its crown portion, therefore, opposite the tread, although it can, if desired, cover a major portion or entire inner surface of the tire by extending essentially from bead-to-bead.

The sealing composite strip can be applied in a unitary sheet form, as a multiple of individual strips or as a relatively narrow individual strip spirally adhered circumferentially around the inner surface of the crown portion of the tire.

It is to be appreciated that the sealant composite can be adhered as an extruded strip circumferentially and spirally around the inside of the tire on its inner surface in the area of its crown portion with sufficient revolutions to achieve a desired width of the composite.

The adherent, sealant composite on the inside surface of the tire has a thickness in the range of about 0.1 (0.25) to about 0.3 (0.76), preferably about 0.12 (0.3) to about 0.25 (0.6) inches (cm). Thus, a desirable thickness can be in the range of about 0.15 (0.4) to about 0.25 (0.6) inch (cm).

The sealant composite, adhered to the inside surface of the tire is particularly valuable for sealing against puncturing objects and for sealing holes left upon their removal, over a wide range of temperatures, such as from about -20°C. to about 100°C. The sealant is also particularly valuable because of its resistance to flow, or a relative resistance to change in its physical state after being applied to the inner surface of the tire. Thus, it exhibits an enhanced degree of dimensional stability.

Uniquely the sealant composite is preferably applied and adhered to the interior surface of a cured pneumatic rubber tire of the tubeless type by being extruded under conditions of heat and pressure to form a strip or sheet directly onto the tire surface which, upon release from shear force of extrusion, substantially immediately forms the adherent sealant composition characterized by a having a high ability to adhere to metal puncturing objects while maintaining a dimensional stability and resistance to flow as opposed to a fluid being spray coated, brushed or poured onto the interior surface of the tire.

The backbone of the sealant composite is the pre-partially crosslinked butyl rubber.  It is important that the butyl rubber is partially pre-crosslinked prior to mixing with the other ingredients and prior to application to the inner tire surface.  It is desired the little or essentially no curing or crosslinking of the butyl rubber be affected after application to the inside of the tire.  One important reason is to provide better control over the degree of crosslinking (e.g. to prevent over crosslinking) of the butyl and, also to eliminate a secondary curing of the resultant cured tire/sealant assembly.

The butyl rubber is one of the type prepared by polymerizing a mixture of isobutylene and a minor amount of isoprene.  The mixture can also contain a crosslinking agent for pre-partially crosslinking the butyl rubber.  The butyl or halobutyl rubber is partially crosslinked to an extent characterized by about 10 to about 90 percent, preferably about 20 to about 80 percent soluble in cyclohexane at about 80°C. This compares to about 2 percent soluble for a lesser crosslinked butyl and only about 98 weight percent soluble for a higher crosslinked butyl.

The butyl rubber typically has an average molecular weight in excess of 100,000, preferably in the range of 200,000 to 400,000 and even more preferably in the range of about 300,000 to about 400,000. As already pointed out, the butyl rubber is partially crosslinked. The partially crosslinking of the butyl rubber is intended to provide a composite which is not fully cured so that it is not fully resilient and has some capability of deforming under force or pressure, as opposed to the more resilient, rubbery matrix of a fully cured material. However, the partially cured composite is intended to be distinguished from one which has little or no cure at all so that it maintains the required degree of dimensional stability.

In these regards, the crosslinking of the butyl rubber can be accomplished by various means. Such methods include outright curing with a sulfur or quinoid system. Purely peroxide cure systems are generally not desired. Alternately, cure-promoting agents can be included in the isobutylene-isoprene polymerization mixture which enhances a crosslinking of the butyl upon or after its recovery from the polymerization system. Generally, such crosslinking methods and techniques are known to those having skill in the art and it is considered that the technology need not be repeated here.

The tackifying resin is used in the practice of this invention to enhance the composite's stickiness and ability to seal around the puncturing object. Obviously, a primary purpose is to increase the inherent tack of the composite of this invention. Accordingly, it is intended that the resin be normally considered as a rubber tackifier and compatible or easily mixed with the polyisoprene rubbers. Representative of such resin is a thermoplastic polymeric resinous composition comprising about 40 to 80 weight percent units derived from piperylene and from about 60 to 20 weight percent units derived from 2-methyl-2 butene wherein the said resinous composition has a softening point from about 76°C to about 115°C, preferably about 90°C to about 100°C. The said polymeric resinous composition can be modified by having up to about 25 weight percent units derived from other unsaturated hydrocarbons containing 4 to 6 carbon atoms. The monomer mixture is polymerized in the presence of an anhydrous metal halide selected from aluminum chloride or stannic chloride, preferably aluminum chloride.

It is important to appreciate that such resins are usually used in an amount of about 3-10 phr in rubbers to provide tack so that they adhere during product manufacture. Rubber products requiring adhesion to other products conventionally contain 20-40 phr of the resin. Resin manufacturers often design their resins to be compatible with rubbers at least through this range. Uniquely, apparently by partially pre-crosslinking the butyl rubber before compounding, it was that use of this resin at levels beyond expectation produced a sealant composite of exceptional performance.

It is required that the carbon black be of the reinforcing type (rubber reinforcing type). More specifically, it is intended that the carbon black be of the type suitable as a rubber reinforcing agent. This is to distinguish it from non-reinforcing type carbon black which might be used for such purposes as printing inks and the like. In these regards, exemplary of such recent reinforcing carbon blacks HSF (high abrasion furnace black), GPF (general purpose furnace black), SRF (semi-reinforcing furnace black), ISAF (intermediate super abrasion furnace black) and SAF (super abrasion furnace black).

It is to be understood that antioxidants, antiozonants and coloring pigments can be included in the sealant composite mixture.

The sealant composite can be conveniently extruded directly onto the inner surface of a cured rubber tire by preferably cleaning or preparing the inner surface of the tire. Such cleaning or preparation can be accomplished by (i) cleaning with an aqueous detergent solution or hydrocarbon solvent and allowing it to dry and/or (ii) buffing or abrading the surface to roughen it.

The methodology of cleaning or preparing the tire surface will largely depend upon the tire surface composition and cure and pre-cure history of the tire.

The method or operation of the sealing effect against a puncturing object or the sealing of the hole in the tire is by mechanical means of the sheet composite adhering to and sealing around the puncturing object or sealing the hole itself, relying on both the tack and plasticity of the composite to stick to the nail or puncturing object, and pulled into the hole as the nail or object is withdrawn through the sealant composite.

The tire of this invention can self-seal against various puncturing objects depending somewhat upon the tack, resiliency and thickness of the sealant composite as well as the size and shape of the puncturing object. Typically, the tire can self-seal punctures caused by nails and objects of various sizes. Representative of such nails are No. 4 to 8 penny size nails and although nails generally having a diameter up to about 0.15 inch (0.38 cm) are contemplated.

The vulcanized rubber tire itself can be of various cured or vulcanized rubbers such as natural rubber and synthetic rubber and their mixtures or blends. For example, it can be rubbery butadienestyrene copolymers, butadiene-acrylonitrile copolymers, cis-1,4-polyisoprene, polybutadiene, isoprene- butadiene copolymers, butyl rubber, halogenated butyl rubber, such as chloro or bromobutyl rubber, ethylene-propylene, copolymers, ethylene-propylene terpolymers (EPDM's), elastomeric copolyesters and polyurethane elastomers. Typically, the various polymers are cured or vulcanized by normal curing methods and recipes.

The sealant composition is formulated to contain certain specific constituents within narrow and defined composition ranges. The difficulty lies in providing a composition which has the ability to both heal cuts in the sealant caused by a puncture and to seal by sticking against a puncturing object or sealing a puncture hole when the puncturing object is withdrawn, pulling the sealant into the hole. Once the puncturing object is removed and the hole filled, the sealant has been observed to have sufficient strength and stability to maintain air under pressures, generally at least up to 24 and preferably up to 40 psig (pounds per square inch-gauge) while the tire is being run under test.

The practice of this invention is further illustrated by reference to the following examples which are intended to be representative rather than restrictive of the scope of the invention. Unless otherwise indicated, all parts and percentages are by weight.

## EXAMPLE I

Tubeless pneumatic rubber tire was prepared, shaped and cured of the P215/75R15 size having a tread, spaced beads, sidewalls connecting the tread and beads and supporting carcass structure.

A strip of sticky sealant composite, about 2 inches (5 cm) wide and about 0.18 inch (0.46 cm) thick, was circumferentially in a spiral fashion adhered to the inside of the tires in its crown area, opposite its tread by extrusion under conditions of heat and pressure directly onto the tire's inner surface to form an adherent sealant composite about 6 inches (15 cm) wide.

The sealant was prepared by mixing the components comprised of the recipe shown in the following Table 1.

- 11 -  0160614

Table 1

| Components | Parts |
|---|---|
| Butyl Rubber[1] | 100 |
| Tackifying resin[2] | 90 |
| Polybutene[3] | 150 |
| Carbon Black[4] | 90 |

[1]Partially pre-crosslinked, such as Polysar PBXL20 from Polysar Ltd. and Bucar EX263 from Cities Service, Columbian Division.

[2]Obtained as a thermoplastic diolefin/olefin copolymer of piperylene and 2-methyl-2-butene prepared by polymerization with aluminum chloride and having a softening point in the range of 95°C., to 100°C.

[3]A polybutene having a viscosity of about 4250 centistokes at 99° C. as Indopol H1900 from Amoco.

[4]Rubber reinforcing type carbon black.

### EXAMPLE II

A tubeless, pneumatic tire of P215/75R15 size was prepared with the adherent sealant composite in accordance with Example I.

The tire of Example I was tested in combination with and compared to a control P215/75R15 tire without a sealant composition applied to its inner surface.

For the test, the tires were mounted on a rim, inflated and allowed to rotate, under load, against a 67.5 inch (171 cm) diameter motor-driven dynamometer. The tires were tested according to procedure (AB-1101) at a speed of about 50 miles per hour (mph) (90 kph) under about a 1285 pound (583 kg) load with a hot inflation temperature of about 30 pounds per square inch (psi) (207 kpa). Under this test the tire were run for 100 miles (160 km) for conditioning purposes and then punctured with a 0.18 inch (0.46 cm) diameter (20 penny size) nail into and through a major tread groove. The tires were then allowed to run under the prescribed speed and load while their internal inflation pressure was periodically measured.

Surprisingly, it was observed that the sealant composition of this invention (tire according to Example I) enabled the tire to travel substantially further with the nail in and travelled 3000 miles (5400 km) without failure when the nail was pulled out. The dynamometer test results are shown in the following table 2.

## Table 2

|  | Control[1] Tire Control (No Sealant) | Example I Tire[2] |
|---|---|---|
| Nail-In[1] | 358 Miles[3] (644 km) | 6408 Miles[3] (11,530 km) |
| Nail-Out[2] | 166 Miles[3] (300 km) | 3000 Miles S/F[4] (5400 km) |

[1] Control Tires   - Avg. of two tires
[2] Example I Tires - Avg. of two tires
[3] Miles run until inflation pressure dropped to 13 psi (90 kpa)
[4] S/F: Stop/Finish; test stopped before inflation pressure dropped to 13 psi (90 kpa).

While certain representative embodiments and details have been shown for the purpose of illustrating the invention, it will be apparent to those skilled in this art that various changes and modifications may be made therein without departing from the spirit or scope of the invention.

WHAT IS CLAIMED IS:

1. A pneumatic tire which comprises a tire casing having a adherent sealant composite on its inner surface characterized in that sealant composite is comprised of an admixture of (A) one hundred parts by weight partially pre-crosslinked butyl rubber, (B) about 40 to about 200 parts by weight polybutene having a viscosity in the range of about 50 to about 5000 centistokes at 99°C., (C) about 40 to about 120 parts by weight of at least one thermoplastic olefin/ diolefin copolymer tackifying resin having a softening point in the range of about 10°C., to about 110°C. and (D) about 50 to about 120 parts by weight reinforcing carbon black.

2. The pneumatic tire of Claim 1 characterized in that said sealing composite is adhered as an extruded strip circumferentially and spirally around the inside of the tire on its inner surface in the area of its crown portion with sufficient revolutions to achieve a desired width of the sealant composite.

3. The pneumatic tire of Claim 2 characterized in that the tackifying resin is comprised of a piperylene/2-methyl-2-butene copolymer.

4. The pneumatic tire of Claim 2 characterized in that said tackifying resin has a softening point in the range of about 90°C., to about 100°C., and is comprised of about 40 to about 80 weight percent units derived from piperylene and from about 60 to about 20 weight percent units derived from 2-methyl-2 butene, optionally modified by having up to about 25 weight percent units derived from other unsaturated hydrocarbons containing 4 to 6 carbon atoms, and where the monomer mixture is polymerized in the presence of aluminum chloride.

5. The pneumatic tire of Claim 1 of the tubeless type composed of two spaced, essentially inextensible beads, a crown portion generally having an outer tread, a pair of individual sidewalls extending radially from the axial outer edges of said crown portion to join the respective beads, a supporting or reinforcing carcass structure for said crown portion and sidewalls, extending from bead to bead and said sealant composite adhered as a strip to its inner surface, characterized in that said sealant composite is, in the absence of sulfur and/or peroxide rubber curatives, comprised of an admixture of (A) one hundred parts by weight of partially pre-crosslinked butyl rubber (B) about 100 to about 150 parts by weight polybutenes having a viscosity, in the range of about 100 to about 4400 centistokes at 99°C., (C) about 80 to about 100 parts by weight of at least one thermoplastic olefin/diolefin copolymer tackifying resin having a softening point in the range of about 90°C., to about 100°C., and (D) about 70 to about 110 parts by weight reinforcing carbon black.

6. The pneumatic tire of Claim 5 characterized in that said sealing composite is adhered as an extruded strip circumferentially and spirally around the inside of the tire on its inner surface in the area of its crown portion with sufficient revolutions to achieve a desired width of the sealant composite.

7. The pneumatic tire of Claim 5 characterized in that said tackifying resin has a softening point in the range of about 90°C., to about 100°C., and is comprised of about 40 to about 80 weight percent units derived from piperylene and from about 60 to about 20 weight percent units derived from 2-methyl-2 butene, optionally modified by having up to about 25 weight percent units derived from other unsaturated hydrocarbons containing 4 to 6 carbon atoms, and where the monomer mixture is polymerized in the presence of aluminum chloride.

8. The pneumatic tire of Claim 5 characterized in that the tackifying resin is comprised of a piperylene/2-methyl-2-butene copolymer.

9. The pneumatic tire of Claim 7 characterized in that said tackifying resin has a softening point in the range of about 90°C., to about 100°C., and is comprised of about 40 to about 80 weight percent units derived from piperylene and from about 60 to about 20 weight percent units derived from 2-methyl-2 butene, optionally modified by having up to about 25 weight percent units derived from certain other unsaturated hydrocarbons containing 4 to 6 carbon atoms, and where the monomer mixture is polymerized in the presence of aluminum chloride.

10 . The pneumatic tire of Claim 8 characterized in that said sealing composite is adhered as an extruded strip circumferentially and spirally around the inside of the tire on its inner surface in the area of its crown portion with sufficient revolutions to achieve a desired width of the sealant composite.